# FASCICULE DE BREVET EUROPEEN

(11) **EP 0 651 376 B1**
(45) Date de publication et mention de la délivrance du brevet: **03.03.1999**
(21) Numéro de dépôt: 94402425.6
(22) Date de dépôt: 27.10.1994
(51) Int. Cl.: G11B 5/48

(54) **Patin de vol à plots de soudures composites et procédé de réalisation**
Gleitkörper mit Kompositlötstellen und Verfahren zu dessen Herstellung
Flying slider with composite solder pads and method of manufacture

(30) Priorité: 29.10.1993 FR 9312941
(43) Date de publication de la demande: 03.05.1995
(73) Titulaire: COMMISSARIAT A L'ENERGIE ATOMIQUE, 75015 Paris (FR); SILMAG S.A., 38054 Grenoble Cédex 9 (FR)
(72) Inventeur: Lazzari, Jean-Pierre, F-38700 Corenc (FR)
(74) Mandataire: Dubois-Chabert, Guy

(56) Documents cités:
- EP-A- 0 265 720
- US-A- 4 786 999
- PATENT ABSTRACTS OF JAPAN vol. 13, no. 329 (P-904) 25 Juillet 1989 & JP-A-01 092 975 (FURUKAWA ELECTRIC CO. LTD.) 12 Avril 1989
- PATENT ABSTRACTS OF JAPAN vol. 15, no. 322 (P-1239) 16 Août 1991 & JP-A-03 116 478 (NEC CORP.) 17 Mai 1991
- PATENT ABSTRACTS OF JAPAN vol. 17, no. 118 (P-1500) 11 Mars 1993 & JP-A-04 302 879 (TOSHIBA CORP.) 26 Octobre 1992

## Description

### Domaine technique

La présente invention a pour objet un patin de vol à plots de soudure composites et un procédé de réalisation. Elle trouve une application dans l'enregistrement magnétique, notamment dans l'enregistrement sur disque dur.

### Etat de la technique antérieure

Les patins de vol à tête magnétique sont en général collés à l'extrémité d'un bras faisant office de ressort. Les connexions électriques entre la tête et les circuits extérieurs sont assurées par des fils conducteurs torsadés soudés sur le patin et supportés par le bras.

Pour éviter l'emploi de tels fils, on peut avoir recours à des pistes de connexion réalisées sur la face supérieure du patin (c'est-à-dire la face opposée au disque) et sur le bras-ressort. Pour réaliser les connexions électriques, tout en assurant le soudage et la tenue mécanique du patin sous l'extrémité du bras, on réalise des plots de soudure entre les pistes du patin et celles du bras.

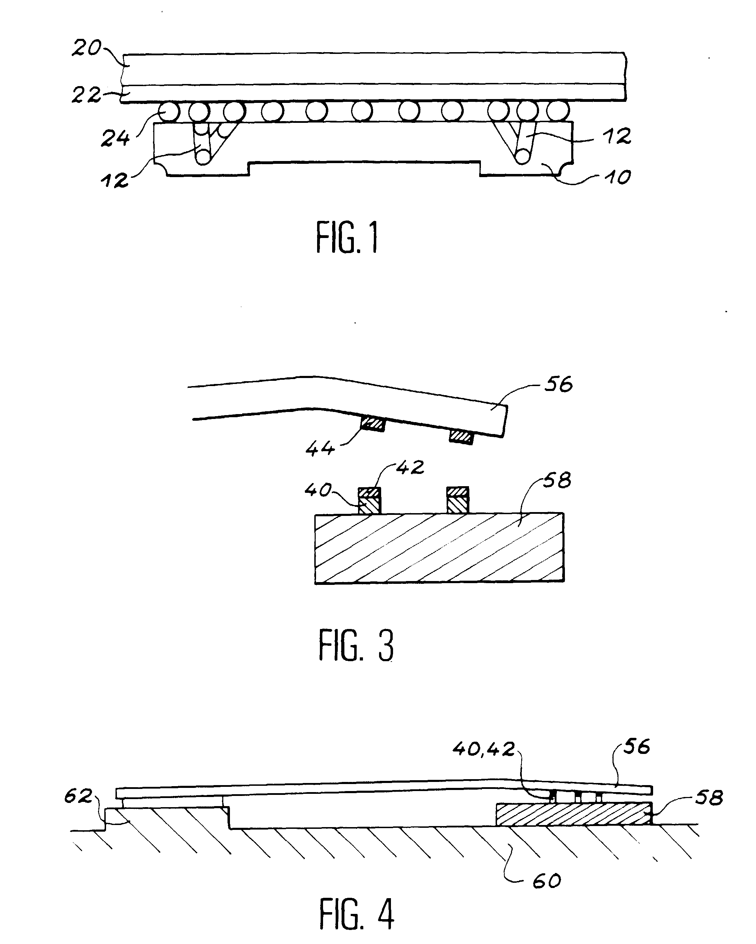

Le document US-A-4,789,914 qui reflète le préambule des revendications indépendantes ci-jointes décrit ainsi un assemblage qui est représenté sur la figure 1 annexée. Sur cette figure, on voit un patin de vol 10 avec des pistes de connexion 12, l'extrémité 20 d'un bras-ressort, avec un circuit de connexion 22 et, entre les deux, des plots de soudure 24.

Ce moyen de fixation du patin sous le bras présente l'inconvénient de ne pas assurer un écartement contrôlé entre le bras et le patin. En effet, sous la pression exercée par le bras-ressort, certains plots s'écrasent lors de l'opération de soudure et le patin peut venir en contact avec le bras. Sa mobilité s'en trouve entravée.

La présente invention a justement pour but d'éviter cet inconvénient.

### Exposé de l'invention

A cette fin, l'invention prévoit que chaque plot de soudure est composite, en ce sens qu'il comprend deux parties, une première partie, ou embase, qui est réalisée en un matériau qui n'est pas fusible à la température à laquelle on procède au soudage, cette embase ayant une certaine hauteur contrôlée qui va assurer un écartement minimum entre le patin et le bras, et une seconde partie, qui est un plot en matériau fusible, lequel va réaliser la soudure proprement dite. Ainsi, même si les plots fusibles s'écrasent plus ou moins selon les défauts de planérité des pièces, le patin et le bras seront toujours écartés au minimum d'une distance égale à la hauteur des embases.

De façon précise, la présente invention a pour objet un patin de vol comprenant des plots de soudure pour un assemblage avec un bras-ressort, caractérisé par le fait que chaque plot de soudure comprend, d'une part, une embase solidaire du patin de vol, cette embase ayant une hauteur contrôlée et étant réalisée en un premier matériau et, d'autre part, un plot fusible disposé sur l'embase, ce plot fusible étant réalisé en un second matériau ayant une température de fusion plus basse que celle du premier.

Le premier matériau est avantageusement un matériau conducteur comme le cuivre, le nickel ou les alliages de nickel par exemple.

Le second matériau peut être par exemple l'étain, le plomb, l'indium ou leurs alliages (par exemple, l'étain-plomb).

Dans un assemblage conforme à l'invention, les plots peuvent servir à la fois à la tenue mécanique de l'ensemble et à des connexions électriques. Mais éventuellement, certains plots peuvent ne servir qu'à la tenue mécanique.

Pour ceux des plots qui servent de connexion électrique, l'embase sera réalisée sur une piste de connexion formée sur le patin de vol et le plot fusible sera en contact avec une piste de connexion similaire, disposée sous le bras-ressort.

La présente invention a également pour objet un procédé de réalisation d'un assemblage patin de vol/bras-ressort, le patin étant conforme à ce qui vient d'être défini. Selon l'invention, ce procédé comprend les opérations suivantes :
- on réalise sur un patin de vol des embases en un premier matériau ayant une première température de fusion, ces embases ayant une hauteur contrôlée,
- on forme ensuite, sur chacune de ces embases, un second plot fusible en un second matériau ayant une seconde température de fusion inférieure à celle du premier matériau,
- on assemble le bras-ressort sur le patin de vol dans une position qui sera celle de la position de travail de l'assemblage,
- on élève la température des plots au-dessus de la seconde température de fusion du second matériau mais en dessous de la première température de fusion du premier.

Dans un mode particulier de mise en oeuvre, on dépose en outre des troisièmes plots fusibles supplémentaires sur l'extrémité du bras ressort, ces plots supplémentaires étant réalisés dans le second matériau et étant disposés à des emplacements qui corespondent aux plots fusibles déposés sur les embases, ces troisièmes plots supplémentaires venant se souder sur les premiers lors de l'opération d'élévation de température.

La réalisation des plots de soudure sur le patin lui-même est particulièrement intéressante dans le cas des réalisations collectives de patins.

### Brève description des dessins

- la figure 1, déjà décrite, montre un assemblage selon l'art antérieur,
- les figures 2a à 2h montrent diverses étapes d'un procédé selon l'invention,
- la figure 3 illustre une variante où les plots fusibles sont disposés à la fois sous le bras-ressort et sur le patin,
- la figure 4 illustre schématiquement le mode de montage du patin sous le bras-ressort.

### Exposé détaillé de modes de réalisation

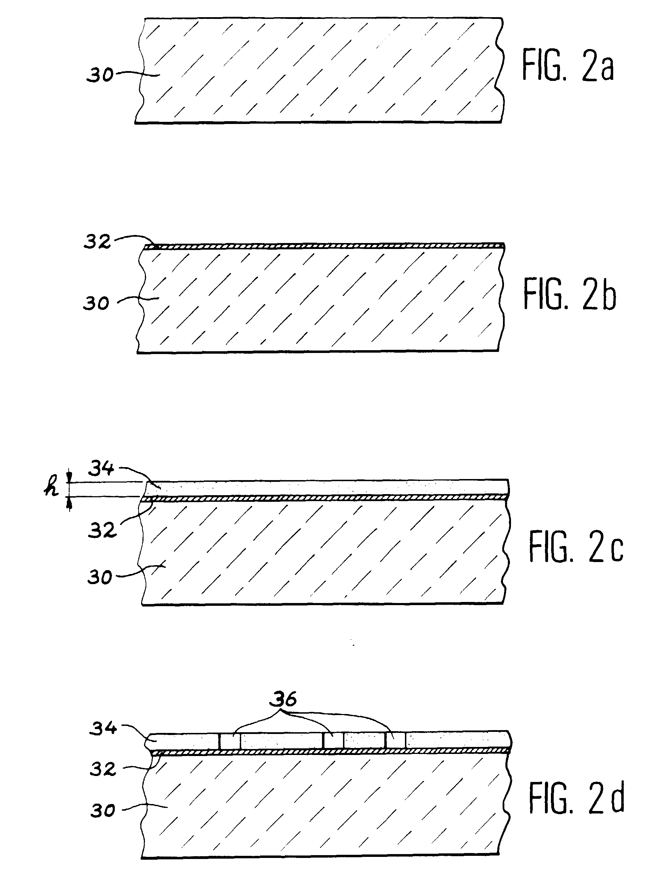

Les figures 2a à 2h illustrent huit étapes d'un procédé de réalisation conforme à l'invention.

On part d'un substrat 30, par exemple une plaquette de silicium, qui va servir à réaliser le patin de vol (fig. 2a).

Sur ce substrat 30, on dépose une couche mince conductrice 32 ayant une bonne adhérence, par exemple une couche de chrome (fig. 2b).

On dépose ensuite, sur cette couche conductrice 32, un film photosensible 34 ayant une épaisseur h égale à l'intervalle minimum souhaité entre le patin de vol et l'extrémité du bras-ressort (Fig. 2c). Cette épaisseur peut être par exemple de 75 µm.

Par photolithographie de ce film 34, on forme des ouvertures 36 à des emplacements appropriés, avec un diamètre égal au diamètre des embases que l'on veut réaliser (fig. 2d). Ce diamètre peut varier entre environ 100 et 200 µm.

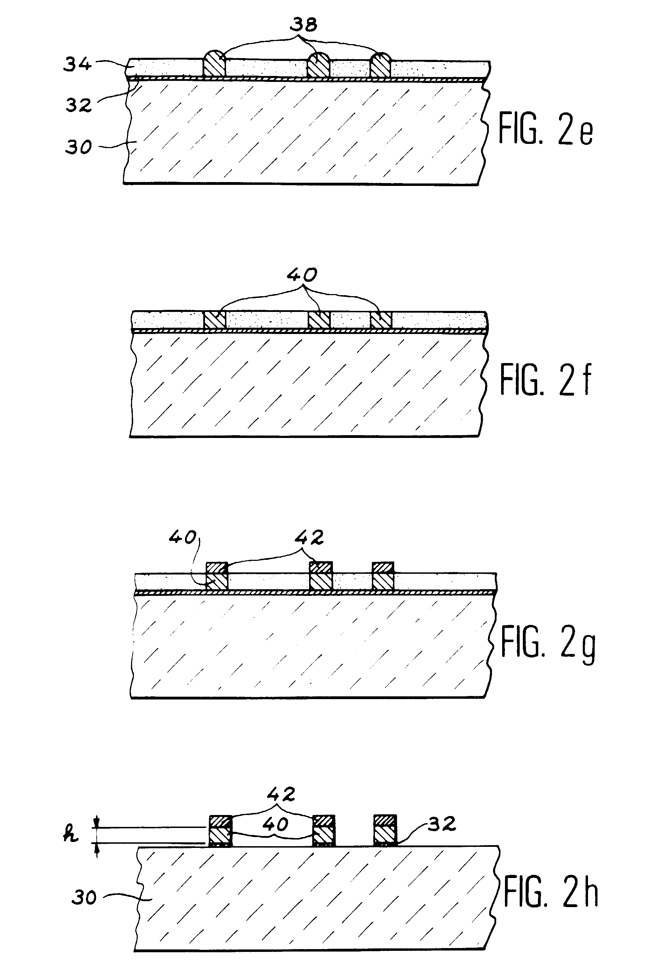

On forme des plots conducteurs 38 dans ces ouvertures par croissance électrolytique d'un premier matériau conducteur, par exemple du cuivre, en prenant la couche conductrice 32 comme électrode (fig. 2e).

On planarise les plots obtenus, par une méthode de polissage par exemple, pour ramener le métal au niveau de la feuille 34. On obtient ainsi les embases 40 (fig. 2f).

On forme les plots fusibles 42 par croissance électrolytique d'un second matériau comme l'étain-plomb sur les embases 40 (fig. 2g).

On dissout ensuite la feuille 34 et on grave la couche d'adhérence 32. Il reste les plots composites 40-42 (fig. 2h).

Le procédé qui vient d'être décrit suppose que les plots sont réalisés par croissance électrolytique. On pourrait procéder autrement (par exemple par gravure), auquel cas la couche conductrice d'adhérence 32 ne serait pas nécessaire.

Dans un mode de mise en oeuvre possible illustré sur la figure 3, on dépose non seulement des plots 40-42 sur un patin de vol 58 mais également des plots fusibles supplémentaires 44 sous le bras-ressort 56. Ces plots 44 peuvent être dans le même matériau que les plots fusibles 42, par exemple de l'étain-plomb. Ces plots supplémentaires sont disposés en regard des plots fusibles 42 disposés au sommet des embases 40 sur le patin de vol.

L'assemblage du patin de vol sous l'extrémité du bras-ressort s'effectue de préférence conformément à la figure 4.

Le patin 58 est tenu sur un plan de référence 60, par aspiration par exemple. Le bras-ressort 56 est tenu sur un piédestal 62 solidaire du plan de référence 60.

Ce piédestal 62 représente le pied du bras-ressort dans le montage définitif. Le bras est donc placé dans la position même qu'il occupera en fonctionnement.

Le positionnement relatif du patin par rapport au bras-ressort s'effectue soit manuellement, sous microscope, soit automatiquement, par reconnaissance optique.

Dans cette position, le bras exerce un effort sur les plots de soudure 40, 42.

A l'aide d'un faisceau laser, ou de moyens de chauffage infrarouge, ou de tout autre moyen, on élève la température des plots de soudure au-dessus de la température de fusion des plots 42 (et, le cas échéant des plots supplémentaires 44).

En pratique, avec les matériaux habituellement utilisés (étain, étain-plomb), la température est portée dans la plage 150-250°C. Les plots fusibles fondent et s'écrasent plus ou moins selon la position et les dimensions des différentes pièces.

Ainsi, même si le bras-ressort n'est pas parfaitement parallèle au plan du patin (ce qui arrive fréquemment), l'espace minimum entre le ressort et le patin sera égal à l'épaisseur des plots de cuivre 40, l'épaisseur d'étain comprenant les différences de hauteurs dues à la mauvaise torsion du ressort. Ainsi, quand l'ensemble sera monté sur le disque d'enregistrement, le ressort aura gardé sa forme en léger biais, mais le plan du patin, lui, sera parfaitement parallèle à celui du pied du ressort.

## Revendications

1. Patin de vol comprenant des plots de soudure (24, 40, 42, 44) pour un assemblage avec un bras-ressort, caractérisé par le fait que chaque plot de soudure comprend, d'une part, une embase (40) solidaire du patin de vol (10, 58), cette embase ayant une hauteur contrôlée (h) et étant réalisée en un premier matériau et, d'autre part, un plot fusible (42) disposé sur l'embase (40), ce plot fusible (42) étant réalisé en un second matériau ayant une température de fusion plus basse que celle du premier.

2. Patin de vol selon la revendication 1, caractérisé par le fait que le premier matériau est un matériau conducteur.

3. Patin de vol selon la revendication 2, caractérisé par le fait que le matériau conducteur est pris dans le groupe constitué par le cuivre, le nickel et les alliages de nickel.

4. Patin de vol selon la revendication 1, caractérisé par le fait que le second matériau est pris dans le groupe constitué par l'étain, le plomb, l'indium et leurs alliages.

5. Patin de vol selon la revendication 1, caractérisé par le fait que pour l'un au moins des plots de soudure, l'embase (40) est en contact avec une connexion électrique disposée sur le patin de vol (58).

6. Procédé de réalisation d'un assemblage patin de vol/bras-ressort, le patin étant conforme à la revendication 1, caractérisé par le fait qu'il comprend les opérations suivantes :
- on réalise, sur un patin de vol (58) des embases (40) en un premier matériau ayant une première température de fusion, ces embases ayant une hauteur contrôlée (h),
- on forme ensuite, sur chacune de ces embases (40), un plot fusible (42) en un second matériau ayant une seconde température de fusion inférieure à celle du premier matériau,
- on assemble le bras-ressort (56) sur le patin de vol (58) dans une position qui sera celle de la position de travail de l'assemblage,
- on élève la température des plots (40, 42) au-dessus de la température de fusion du second matériau mais en dessous de la température de fusion du premier.

7. Procédé selon la revendication 6, caractérisé par le fait qu'on dépose en outre des plots fusibles supplémentaires (44) sur l'extrémité du bras ressort (56), ces plots supplémentaires (44) étant réalisés dans le second matériau et étant disposés à des emplacements qui correspondent aux plots fusibles (42) déposés sur les embases (40), ces plots supplémentaires (44) venant se souder sur les premiers (42) lors de l'opération d'élévation de température.

8. Procédé selon la revendication 6, caractérisé par le fait que l'on forme au moins l'une des embases (40) sur une piste de connexion déposée sur le patin de vol (58) et en regard d'une piste de connexion déposée sur le bras-ressort (56).

9. Procédé selon la revendication 6, caractérisé par le fait qu'on réalise les embases (40) par les opérations suivantes :
- on dépose sur un substrat (30) une couche mince conductrice (32),
- on dépose sur cette couche conductrice (32) un film photosensible (34) ayant une épaisseur (h) égale à l'intervalle minimum souhaité entre le patin de vol et l'extrémité du bras-ressort,
- on forme dans le film (34) des ouvertures (36) à des emplacements appropriés,
- on forme des plots conducteurs (38) dans ces ouvertures par croissance électrolytique du premier matériau, en prenant la couche conductrice (32) comme électrode,
- on planarise les plots obtenus (40) pour obtenir les embases (40).

10. Procédé selon la revendication 9, caractérisé par le fait qu'on forme les plots fusibles (42) par croissance électrolytique du second matériau sur les embases (40).

## Claims

1. Slider incorporating welding studs (24, 40, 42, 44) for assembly with a spring arm, characterized in that each welding stud comprises on the one hand a base (40) integral with the slider (10, 58), said base having a controlled height (h) and being made from a first material and on the other hand a meltable stud member (42) placed on the base (40), said meltable stud member (42) being made from a second material having a melting point lower than that of the first material.

2. Slider according to claim 1, characterized in that the first material is a conductive material.

3. Slider according to claim 2, characterized in that the conductive material is chosen from the group constituted by copper, nickel and nickel alloys.

4. Slider according to claim 1, characterized in that the second material is taken from the group constituted by tin, lead, indium and alloys thereof.

5. Slider according to claim 1, characterized in that for at least one of the welding studs, the base (40) is in contact with an electrical connection located on the slider (58).

6. Process for the production of a slider/spring arm assembly, the slider being in accordance with claim 1, characterized in that it comprises the following operations:
- on a slider (58) are formed bases (40) from a first material having a first melting point, said bases having a controlled height (h),
- on each of the said bases (40) is then formed a second meltable stud member (42) from a second material having a second melting point below that of the first material,
- the spring arm (56) is assembled on the slider (58) in a position forming the working position of the assembly,
- the temperature of the studs (40, 42) is raised to above the second melting point of the second material, but below the first melting point of the first material.

7. Process according to claim 6, characterized in that deposition also takes place of supplementary, meltable stud members (44) on the end of the spring arm (56), said supplementary stud members (44) being made from the second material and being placed at locations corresponding to the meltable stud members (42) deposited on the bases (40), said supplementary stud members (44) being welded to the first stud members (42) during the temperature raising operation.

8. Process according to claim 6, characterized in that at least one of the bases (40) is formed on a connection track deposited on the slider (58) facing a connection track deposited on the spring arm (56).

9. Process according to claim 6, characterized in that the bases (40) are produced by the following operations:
- a thin conductive coating (32) is deposited on a substrate (30),
- on said conductive coating (32) is deposited a photosensitive film (34) having a thickness (h) equal to the minimum desired spacing between the slider and the end of the spring arm,
- in the said film (34) openings (36) are formed at appropriate locations,
- conductive studs (38) are formed in said openings by electrolytic growth of the first material, the conductive coating (32) serving as the electrode,
- the studs (40) obtained are planarized in order to obtain the bases (40).

10. Process according to claim 9, characterized in that the meltable stud members (42) are formed by electrolytic growth of the second material on the bases (40).

## Patentansprüche

1. Gleitkörper mit Lötstellen bzw. Lötelementen (24, 40, 42, 44) für den Zusammenbau mit einem Federarm,
**dadurch gekennzeichnet,**
daß jedes Lötelement einerseits einen fest mit dem Gleitkörper (10, 58) verbundenen Ansatz (40) umfaßt, wobei dieser Ansatz eine kontrollierte Höhe (h) aufweist und aus einem ersten Material hergestellt ist, und andererseits auf dem Ansatz (40) einen schmelzbaren Ansatz (42) umfaßt, wobei dieser schmelzbare Ansatz (42) aus einem zweiten Material hergestellt ist, dessen Schmelztemperatur niedriger als die des ersten Materials ist.

2. Gleitkörper nach Anspruch 1, dadurch gekennzeichnet, daß das erste Material ein leitfähiges Material ist.

3. Gleitkörper nach Anspruch 2, dadurch gekennzeichnet, daß das leitfähige Material aus der Gruppe gewählt ist, die durch Kupfer, Nickel und die Nickellegierungen gebildet wird.

4. Gleitkörper nach Anspruch 1, dadurch gekennzeichnet, daß das zweite Material aus der Gruppe gewählt ist, die durch Zinn, Blei, Indium und ihre Legierungen gebildet wird.

5. Gleitkörper nach Anspruch 1, dadurch gekennzeichnet, daß für wenigstens eines der Lötelemente der Ansatz (40) Kontakt hat mit einer auf dem Gleitkörper (58) angeordneten elektrischen Verbindung.

6. Herstellungsverfahren eines Gleitkörper/Federarm-Zusammenbaus, wobei der Gleitkörper dem Anspruch 1 entspricht, dadurch gekennzeichnet, daß es die folgenden Schritte umfaßt:
- man erzeugt auf dem Gleitkörper (58) Ansätze (40) aus einem ersten Material mit einer ersten Schmelztemperatur, wobei diese Ansätze eine kontrollierte Höhe (h) haben,
- man bildet auf jedem dieser Ansätze (40) einen schmelzbaren Ansatz (42) aus einem zweiten Material mit einer zweiten Schmelztemperatur, niedriger als die des ersten Materials,
- man baut den Federarm (56) mit dem Gleitkörper (58) in einer Stellung zusammen, die der Betriebsstellung der Einheit entspricht,
- man erhöht die Temperatur der Lötelemente (40, 42), so daß sie höher als die Schmelztemperatur des zweiten Materials aber niedriger als die Schmelztemperatur des ersten Materials ist.

7. Verfahren nach Anspruch 6, dadurch gekennzeichnet, daß man außerdem zusätzliche schmelzbare Lötelemente (44) auf dem Ende des Federarms (56) anbringt, wobei diese zusätzlichen Lötelemente (44) aus dem zweiten Material hergestellt werden und an Stellen angeordnet sind, die den auf den Ansätzen (40) hergestellten schmelzbaren Lötelementen (42) entsprechen, und diese zusätzlichen Ansätze (44) sich bei der Temperaturerhöhungsoperation mit den ersten (42) verlöten.

8. Verfahren nach Anspruch 6, dadurch gekennzeichnet, daß man wenigstens einen der Ansätze (40) auf einer Verbindungsspur bzw. - leiterbahn bildet, die sich auf dem Gleitkörper (58) befindet und einer Verbindungsleiterbahn gegenübersteht, die sich auf dem Federarm (56) befindet.

9. Verfahren nach Anspruch 6, dadurch gekennzeichnet, daß man die Ansätze (40) durch folgende Operationen herstellt:
- man scheidet auf einem Substrat eine leitfähige Dünnschicht (32) ab,
- man scheidet auf dieser leitfähigen Dünnschicht (32) einen photosensiblen Film (34) mit einer Höhe (h) gleich dem erwünschten Minimalabstand zwischen dem Gleitkörper und dem Federarm-Ende ab,
- man bildet in dem Film (34) Öffnungen (36) an den geeigneten Stellen,
- man bildet in diesen Öffnungen durch elektrolytisches Wachstum leitende Elemente (38) aus dem ersten Material, indem man die leitende Schicht (32) als Elektrode nimmt,
- man planarisiert die erhaltenen Lötelemente (40), um die Ansätze (40) herzustellen.

10. Verfahren nach Anspruch 9, dadurch gekennzeichnet, daß man die schmelzbaren Elemente (42) durch elektrolytisches Wachstum des zweiten Materials auf den Ansätzen (40) bildet.
